# EUROPEAN PATENT SPECIFICATION

(11) **EP 1 457 108 B1**
(45) Date of publication and mention of the grant of the patent: **27.09.2006**
(21) Application number: 04075763.5
(22) Date of filing: 09.03.2004
(51) Int. Cl.: A01K 43/10, B41F 15/08

(54) **Egg stamp and egg stamping machine**
Eierstempel und Eierstempelmaschine
Cachet aux oeufs et machine à marquer des oeufs

(30) Priority: 10.03.2003 NL 1022880
(43) Date of publication of application: 15.09.2004
(73) Proprietor: Hedipack, 6971 LG Brummen (NL)
(72) Inventor: Grootherder, Berend Derk, 6971 LG Brummen (NL)
(74) Representative: Dokter, Hendrik Daniel

(56) References cited:
- DE-C- 70 607
- US-A- 3 389 654
- US-A- 4 314 503
- US-A- 5 142 976
- US-A- 5 577 444

## Description

The invention relates to a stamp for arranging an imprint with ink on a convex surface, for instance the surface of an egg, comprising a holder for and including a membrane of a flexible material which is to be brought into contact with the convex surface and which is provided with a part permeable to the ink and corresponding to the imprint, in addition to means for guiding ink from a reservoir to the permeable part.

In accordance with statutory regulations and in the interest of consumers, there is a need to arrange an imprint on eggs to be marketed, at the location where these eggs are produced, i.e. at a poultry farm. On the basis of such an imprint it must be possible to determine the origin of an egg, even after it has found its way to an end-user via a wholesaler and retailer.

From US-A-4314503 is known a stencil apparatus especially useful for printing on a curved or irregular underlying surface, particularly on the rounded shoulders of plastic bottles, so that the code can be seen from above when the bottles are stacked in a conventional store diary case. This apparatus comprises a cylindrical rigid housing member for enclosing a quantity of printing fluid, which fluid is to be pressurized by a piston movable in said housing member.

DE-A-70607 discloses an egg stamp, comprising flexible permeable membrane at the end of a cylindrical rigid holder for a dye, which dye is to be pressed through the membrane by a piston movable in said holder.

US-A-5577444 disloses a hand stamp having a holder means which includes an ink storing space and a stamping member connected each other, in which the stamping member is made of an open-cell foam material partly heat sealed to form an ink impermeable area with a remained area for ink permeation to effect a printing.

Further, an egg stamp is known which is provided with a flat surface which is comparatively small relative to the dimensions of an egg and which has fixed rubber letters in mirror-image. Such a stamp has the drawback that, as a result of the convex form of the surface for printing, the edges of imprints are in some cases deformed or even incomplete. An inherent disadvantage results from the manner in which the known stamp is provided with ink, i.e. by bringing the stamp into contact with the surface of an ink-containing body, for instance an inkpad, before arranging the imprint on the convex surface.

Likewise known is a device for arranging an imprint on an egg using an apparatus provided with a so-called ink-jet, wherein ink is sprayed onto the surface of an egg via a specifically chosen pattern of micro-channels. An ink-jet apparatus has the drawback of being expensive to purchase, being not simple to operate and susceptible to malfunction, particularly as a result of blockages in the ink channels.

It is an object of the invention to provide a stamp with which the edges of an imprint can also be arranged fully and in undeformed manner on a convex surface.

Such a stamp must be simple to operate and not susceptible to malfunction.

These objectives are achieved with a stamp of the type stated in the preamble of claim 1, which according to the invention is characterized in that the part permeable to the ink and corresponding to the imprint is formed in a flexible foil arranged on the membrane, and the membrane is provided at that position with channels for guiding ink to said part.

Using a stamp according to the invention the flexible membrane with the ink-permeable part is brought into contact with the relevant convex surface, wherein as a result of its flexibility the membrane is able to precisely follow the curvature of this surface, so that an imprint can be arranged on this surface fully and in undeformed manner, i.e. including the edges of this imprint.

In one embodiment the reservoir is provided in the holder.

In another embodiment the holder is manufactured from an elastic material.

In a stamp according to the invention the membrane for placing into contact with the convex surface preferably has a convex form.

It has been found that, when an imprint is arranged on a convex surface with such a stamp, there occurs initially a point contact between the convex form of the membrane and the convex surface, from which the membrane then extends over the convex surface in contact with this surface, wherein no movements of the membrane occur relative to the convex surface. An imprint formed with a stamp with convexly formed membrane is sharp, complete and also undeformed at the edges.

The part permeable to the ink and corresponding to the imprint is for instance obtained by means of a photo-etching process.

In yet another embodiment, wherein the part corresponding to the imprint is provided on the underside of the holder in the position of use, the holder is provided on its top side with a filling opening for the ink, and the holder is for instance provided on its top side with fixing means for fixing the stamp in a stamping machine.

A stamp according to the invention can be applied for manually arranging an imprint with ink simultaneously on a number of convex surfaces disposed in a predetermined configuration, for instance a number of eggs placed in an egg-box. For this purpose a number of stamps according to the above described invention corresponding to this number are fixed in a frame in a configuration corresponding to this determined configuration, which frame is provided with a handle for manually bringing these stamps into simultaneous contact with these surfaces.

The invention further relates to a stamping machine for arranging an imprint with ink simultaneously on a number of convex surfaces disposed in a predetermined configuration, comprising a frame on which a number of stamps according to the above described invention corresponding to this number are fixed in a configuration corresponding to this determined configuration for simultaneously bringing these stamps into contact with these surfaces.

In a practically advantageous embodiment of such a stamping machine, the stamps are fixed to an elongate straight carrier bar. Using such a stamping machine it is possible in simple manner to provide a plurality of convex surfaces with an imprint, if these surfaces are presented to the stamping machine arranged in an elongate straight disposition, for instance on a conveyor belt.

In a preferred embodiment of a stamping machine according to the invention, which is particularly intended to simultaneously arrange an imprint with ink on a number of eggs in an egg-box on a horizontal conveyor belt, wherein a predetermined number of eggs at a time are placed transversely of the transporting direction, this stamping machine comprises an elongate carrier bar which in operative position extends horizontally transversely over the conveyor belt and is movable in vertical direction, and to which are fixed a number of stamps according to the above described invention corresponding to this number for simultaneously bringing these stamps into contact with these eggs.

The invention will be elucidated hereinbelow on the basis of exemplary embodiments and with reference to the drawings.

In the drawings
Fig. 1 shows in perspective view an embodiment of a stamp according to the invention,
Fig. 2 shows in axial cross-section a part of the stamp shown in fig. 1, and
Fig. 3 shows in perspective view an embodiment of a stamping machine according to the invention.

Corresponding components are designated in the figures with the same reference numerals.

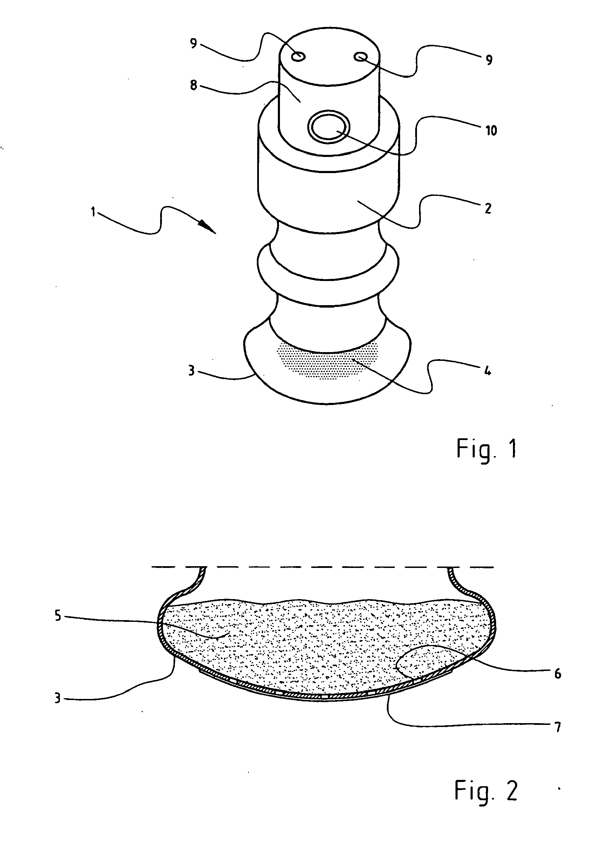

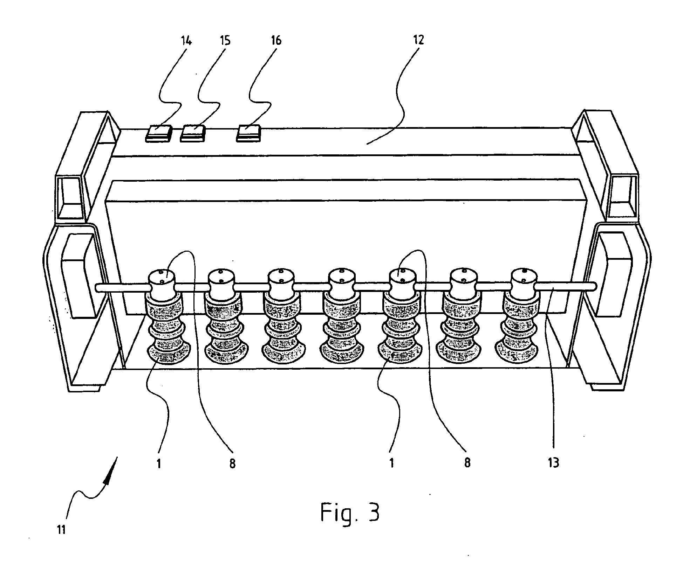

Fig. 1 and fig. 2 show a stamp 1 assembled from a rotation-symmetrical hollow holder 2 of a non-printing nitrile rubber, the underside of which is formed by a convexly shaped membrane 3, on the outside of which is arranged a flexible foil 7 of a suitable plastic material in which, using a photo-etching process, a part 4 permeable to ink 5 is made which corresponds to an imprint that is to be arranged. Holder 2 forms a reservoir for printing ink 5 which is guided to a convex surface for printing via a number of channels 6 with a diameter of for instance 4 mm and the permeable part 4 of flexible foil 7. Holder 2 is closed on its top side by a plug 8 of an appropriate plastic material in which two vertical filling openings 9 for ink and a horizontal bore 10 for fixing the stamp 1 to a carrier bar (see fig. 3) are arranged.

Fig. 3 shows a stamping machine 11 specifically intended for arranging an imprint with ink simultaneously on a number of eggs in an egg-box on a horizontal conveyor belt. Here a number of eggs determined by the relevant egg-box is placed in each case transversely of the transporting direction. Shown are a housing 12 containing the control electronics and drive for an elongate carrier bar 13 which is movable in vertical direction and on which a number of stamps 1 (in the present embodiment seven) corresponding to the number of eggs are fixed at positions corresponding to the positions of the eggs for printing. Stamping machine 11 is disposed in operating position above a conveyor belt such that carrier bar 13 extends horizontally transversely over the conveyor belt at a height such that, in the upward position of carrier bar 13, eggs can pass unimpeded under apparatus 11 and, in the downward position of carrier bar 13, contact is possible between stamps 1 and eggs passing under apparatus 11. Carrier bar 13 is mounted releasably and can be exchanged in simple manner, for instance for a carrier bar on which are fixed a different number of stamps 1 corresponding to a differently configured egg-box (with for instance six eggs in transverse direction). The figure further shows control buttons 14, 15, 16 provided with indicator lights for respectively starting and stopping the apparatus synchronously with the relevant conveyor belt and for performing a single movement of carrier arm 13 in order to check the set height thereof.

## Claims

1. Stamp (1) for arranging an imprint with ink (5) on a convex surface, for instance the surface of an egg, comprising a holder (2) for and including a membrane (3) of a flexible material which is to be brought into contact with the convex surface and which is provided with a part (4) permeable to the ink (5) and corresponding to the imprint, in addition to means for guiding ink (5) from a reservoir to the permeable part (4), **characterized in that** the part (4) permeable to the ink (5) and corresponding to the imprint is formed in a flexible foil (7) arranged on the membrane (3), and the membrane (3) is provided at that position with channels (6) for guiding ink (5) to said part (4).

2. Stamp (1) as claimed in claim 1, **characterized in that** the reservoir is provided in the holder (2).

3. Stamp (1) as claimed in claims 1-2, **characterized in that** the holder (2) is manufactured from an elastic material.

4. Stamp (1) as claimed in any of the claims 1-3, **characterized in that** the membrane (3) for placing into contact with the convex surface has a convex form.

5. Stamp (1) as claimed in any of the claims 1-4, **characterized in that** the part (4) permeable to the ink (5) and corresponding to the imprint is obtained by means of a photo-etching process.

6. Stamp (1) as claimed in any of the claims 1-5, wherein the part corresponding to the imprint is provided on the underside of the holder (2) in the position of use, **characterized in that** the holder (1) is provided on its top side with a filling opening (9) for the ink (5).

7. Stamp (1) as claimed in any of the claims 1-5, wherein the part (4) corresponding to the imprint is provided on the underside of the holder (2) in the position of use, **characterized in that** the holder (2) is provided on its top side with fixing means (10) for fixing the stamp (1) in a stamping machine (11).

8. Stamping machine (11) for arranging an imprint with ink (5) simultaneously on a number of convex surfaces disposed in a predetermined configuration, comprising a frame (13) on which a number of stamps (1) as claimed in any of the claims 1-7 and corresponding to said number are fixed in a configuration corresponding to said determined configuration for simultaneously bringing said stamps (1) into contact with said surfaces.

9. Stamping machine (11) as claimed in claim 8, **characterized in that** the stamps (1) are fixed to an elongate straight carrier bar (13).

10. Stamping machine (11) as claimed in any of the claims 8-9, particularly intended to simultaneously arrange an imprint with ink (5) on a number of eggs in an egg-box on a horizontal conveyor belt, wherein a predetermined number of eggs at a time are placed transversely of the transporting direction, comprising an elongate carrier bar (13) which in operative position extends horizontally transversely over the conveyor belt and is movable in vertical direction, and to which are fixed a number of stamps (1) as claimed in any of the claims 1-7 corresponding to said number for simultaneously bringing said stamps (1) into contact with said eggs.

## Patentansprüche

1. Stempel (1) zum Anbringen eines Aufdrucks mit Tinte (5) auf einer konvexen Oberfläche, zum Beispiel auf der Oberfläche eines Eies, und dieser Stempel (1) umfasst einen Halter (2) für eine und mit einer Membrane (3) aus einem flexiblen Material, die in Kontakt mit der konvexen Oberfläche zu bringen ist und die mit einem für die Tinte (5) durchlässigen und mit dem Aufdruck übereinstimmenden Teil (4) versehen ist, sowie Mittel, um Tinte (5) aus einem Reservoir zu dem durchlässigen Teil (4) zu leiten, **dadurch gekennzeichnet, dass** der für die Tinte (5) durchlässige und mit dem Aufdruck übereinstimmende Teil (4) in einer auf der Membrane (3) angebrachten, flexiblen Folie (7) geformt ist, und die Membrane (3) an dieser Stelle mit Kanälen (6) versehen ist, um die Tinte zu besagtem Teil (4) zu leiten.

2. Stempel (1) nach Anspruch 1, **dadurch gekennzeichnet, dass** das Reservoir in dem Halter (2) geschaffen ist.

3. Stempel (1) nach Anspruch 1-2, **dadurch gekennzeichnet, dass** der Halter (2) aus einem elastischen Material hergestellt ist.

4. Stempel (1) nach einem der Ansprüche 1-3, **dadurch gekennzeichnet, dass** die mit der konvexen Oberfläche in Kontakt zu bringende Membrane (3) eine konvexe Form hat.

5. Stempel (1) nach einem der Ansprüche 1-4, **dadurch gekennzeichnet, dass** der für die Tinte (5) durchlässige und mit dem Aufdruck übereinstimmende Teil (4) mit Hilfe von einem Photoätzungsverfahren geschaffen ist.

6. Stempel (1) nach einem der Ansprüche 1-5, wobei der mit dem Aufdruck übereinstimmende Teil in der Gebrauchsposition an der Unterseite des Halters (2) verschafft ist, **dadurch gekennzeichnet, dass** der Halter (1) an seiner Oberseite mit einer Füllöffnung (9) für die Tinte (5) versehen ist.

7. Stempel (1) nach einem der Ansprüche 1-5, wobei der mit dem Aufdruck übereinstimmende Teil (4) in der Gebrauchsposition an der Unterseite des Halters (2) verschafft ist, **dadurch gekennzeichnet, dass** der Halter (2) an seiner Oberseite mit Befestigungsmitteln (10) zur Befestigung des Stempels (1) in einer Stempelmaschine (11) versehen ist.

8. Stempelmaschine (11) zum simultanen Anbringen eines Aufdrucks mit Tinte (5) auf einer Anzahl von in einer vorher festgelegten Anordnung aufgestellten, konvexen Oberflächen, und diese Stempelmaschine (11) umfasst ein Gestell (13), an dem eine mit besagter Anzahl übereinstimmende Anzahl von Stempeln (1) nach einem der Ansprüche 1-7 in einer mit besagter festgelegten Anordnung übereinstimmenden Anordnung befestigt ist, um besagte Stempel (1) simultan mit besagten Oberflächen in Kontakt zu bringen.

9. Stempelmaschine (11) nach Anspruch 8, **dadurch gekennzeichnet, dass** die Stempel (1) an einer länglichen geraden Tragstange (13) befestigt sind.

10. Stempelmaschine (11) nach einem der Ansprüche 8-9, insbesondere zum simultanen Anbringen eines Aufdrucks mit Tinte (5) auf einer Anzahl von Eiern in einer Eierdose auf einem horizontalen Förderband vorgesehen, wobei jeweils eine vorher festgelegte Anzahl von Eiern quer zur Transportrichtung platziert wird, und diese Stempelmaschine (11) umfasst eine längliche gerade Tragstange (13), die sich in Betriebsstellung horizontal quer über dem Förderband erstreckt und in vertikaler Richtung bewegt werden kann, und an der eine mit besagter Anzahl übereinstimmende Anzahl von Stempeln (1) nach einem der Ansprüche 1-7 befestigt ist, um besagte Stempel (1) simultan mit besagten Eiern in Kontakt zu bringen.

## Revendications

1. Cachet (1) pour apposer une empreinte avec de l'encre (5) sur une surface convexe, par exemple la surface d'un oeuf, comprenant un support (2) pour et comprenant une membrane (3) constituée d'une matière flexible qui doit être amenée en contact avec la surface convexe et qui comporte une partie (4) perméable à l'encre (5) et correspondant à l'empreinte, ainsi que des moyens pour guider l'encre (5) depuis un réservoir jusqu'à la partie perméable (4), **caractérisé en ce que** la partie (4) perméable à l'encre (5) et correspondant à l'empreinte est constituée d'une feuille flexible (7) agencée sur la membrane (3), et la membrane (3) comporte à cet endroit des canaux (6) pour guider l'encre (5) jusqu'à ladite partie (4).

2. Cachet (1) selon la revendication 1, **caractérisé en ce que** le réservoir est prévu dans le support (2).

3. Cachet (1) selon la revendication 1 à 2, **caractérisé en ce que** le support (2) est fabriqué à partir d'une matière élastique.

4. Cachet (1) selon l'une quelconque des revendications 1 à 3, **caractérisé en ce que** la membrane (3) à placer en contact avec la surface convexe a une forme convexe.

5. Cachet (1) selon l'une quelconque des revendications 1 à 4, **caractérisé en ce que** la partie (4) perméable à l'encre (5) et correspondant à l'empreinte est obtenue au moyen d'un procédé de photogravure.

6. Cachet (1) selon l'une quelconque des revendications 1 à 5, dans lequel la partie correspondant à l'empreinte est prévue sur la face inférieure du support (2) dans la position d'utilisation, **caractérisé en ce que** le support (2) comporte à sa face supérieure une ouverture de remplissage (9) pour l'encre (5).

7. Cachet (1) selon l'une quelconque des revendications 1 à 5, dans lequel la partie (4) correspondant à l'empreinte est prévue sur la face inférieure du support (2) dans la position d'utilisation, **caractérisé en ce que** le support (2) comporte à sa face supérieure un moyen de fixation (10) pour fixer le cachet (1) dans une machine à marquer (11).

8. Machine à marquer (11) pour apposer une empreinte avec de l'encre (5) simultanément sur un certain nombre de surfaces convexes disposées dans une configuration prédéterminée, comprenant un cadre (13) sur lequel un certain nombre de cachets (1) selon l'une quelconque des revendications 1 à 7 et correspondant audit nombre sont fixés dans une configuration correspondant à ladite configuration déterminée pour amener simultanément lesdits cachets (1) en contact avec lesdites surfaces.

9. Machine à marquer (11) selon la revendication 8, **caractérisée en ce que** les cachets (1) sont fixés à une barre de support droite allongée (13).

10. Machine à marquer (11) selon l'une quelconque des revendications 8 à 9, particulièrement destinée à apposer simultanément une empreinte avec de l'encre (5) sur un certain nombre d'oeufs dans une boîte à oeufs sur une bande transporteuse horizontale, dans laquelle un nombre d'oeufs prédéterminé sont placés en une fois transversalement par rapport à la direction de transport, comprenant une barre de support allongée (13) qui, dans sa position opérationnelle, s'étend horizontalement transversalement sur la bande transporteuse et est mobile dans la direction verticale, et sur laquelle sont fixés un certain nombre de cachets (1) selon l'une quelconque des revendications 1 à 7 correspondant audit nombre pour amener simultanément lesdits cachets (1) en contact avec lesdits oeufs.
